# EUROPEAN PATENT SPECIFICATION

(11) **EP 3 107 011 B1**
(45) Date of publication and mention of the grant of the patent: **12.12.2018**
(21) Application number: 16170078.6
(22) Date of filing: 18.05.2016
(51) Int. Cl.: G06F 17/27, G06F 17/30

(54) **METHOD, APPARATUS, AND COMPUTER PROGRAM PRODUCT FOR STORAGE OF DYNAMICALLY DERIVED IMAGES IN AN IMAGE CONTAINER FILE**
VERFAHREN, VORRICHTUNG UND COMPUTERPROGRAMMPRODUKT ZUR SPEICHERUNG VON DYNAMISCH ABGELEITETEN BILDERN IN EINER BILDCONTAINERDATEI
PROCÉDÉ, APPAREIL ET PRODUIT DE PROGRAMME INFORMATIQUE POUR STOCKAGE D'IMAGES DÉRIVÉES DE MANIÈRE DYNAMIQUE DANS UN FICHIER D'IMAGE

(30) Priority: 16.06.2015 US 201562180398 P
(43) Date of publication of application: 21.12.2016
(73) Proprietor: Nokia Technologies Oy, 02610 Espoo (FI)
(72) Inventor: AKSU, Emre Baris, 33800 Tampere (FI); HANNUKSELA, Miska, 36110 Tampere (FI); MALAMAL VADAKITAL, Vinod Kumar, 33720 Tampere (FI)
(74) Representative: Berggren Oy, Tampere

(56) References cited:
- US-A1- 2012 191 793
- HANNUKSELA M M ET AL: "Overview of the High Efficiency Image File Format", 21. JCT-VC MEETING; 19-6-2015 - 26-6-2015; WARSAW; (JOINT COLLABORATIVE TEAM ON VIDEO CODING OF ISO/IEC JTC1/SC29/WG11 AND ITU-T SG.16 ); URL: HTTP://WFTP3.ITU.INT/AV-ARCH/JCTVC-SITE/,, no. JCTVC-U0039, 9 June 2015 (2015-06-09), XP030117453,
- HAAKON RIISER ET AL: "Low overhead container format for adaptive streaming", PROCEEDINGS OF THE 2010 ACM SIGMM CONFERENCE ON MULTIMEDIA SYSTEMS : FEBRUARY 22 - 23, 2010, PHOENIX, ARIZONA, USA, ACM, NEW YORK, NY , US, 22 February 2010 (2010-02-22), pages 193-198, XP058103812, DOI: 10.1145/1730836.1730859 ISBN: 978-1-60558-914-5

## Description

### TECHNOLOGICAL FIELD

An example embodiment of the present invention relates generally to storage of images and image sequences.

### BACKGROUND

The High Efficiency Image File Format (HEIF) is a standard developed by the Moving Pictures Experts Group (MPEG) for storage of images and image sequences. HEIF has an item type called derived images which defines certain image manipulation and layout options for image collections and still images. The current specification defines the following derived image types: clean aperture, image rotation, image overlay, and image grid. Each derived image is linked to one or more input images through an item referencing mechanism. An input image may be a coded image or another derived image.

The document:"Overview of the High Efficiency Image File Format", HANNUKSELA M M ET AL, 21. JCT-VC MEETING; 19-6-2015 - 26-6-2015, WARSAW, discloses an overview of the High Efficiency Image File Format (HEIF). This document teaches the storage of individual images as well as image sequences into a container file. The HEIF also enables encapsulation of images and image sequences, as well as their associated metadata into a container file.

The 3GPP File Format provides a mechanism (extended presentation format) to store presentation information related to the contents of the 3GPP file in the form of Synchronized Multimedia Integration Language (SMIL) presentations and Dynamic and Interactive Multimedia Scenes (DIMS) presentations.

The following example consists of a slide show in SMIL consisting of three images shown with the duration of 3 seconds each and an AMR clip that is played in parallel. The presentation is built from a number of separate files:
- SMIL file: "scene.smil";
- 3GP file with AMR: "audioclip.3gp";
- Image files: "pic1.jpg", "pic2.jpg" and "pic3.jpg".
These files can be packaged into a single 3GP file "presentation.3gp" as an extended presentation.

```
  <smil xmlns="http://www.w3.org/2001/SMIL20/Language">
    <head>
       <layout>
         <root-layout width=" 176" height="144"/>
         <region id="pics" left="0" width="176" height="144"/>
       </layout>
    </head>
    <body>
       <par>
         <audio src="#box=moov" dur="9s"/>
         <seq>
           <img region="pics" src="pic1.jpg" dur="3s"/>
           <img region="pics" src="pic2.jpg" dur="3s"/>
           <img region="pics" src="pic3.jpg" dur="3s"/>
         </seq>
       </par>
    </body>
  </smil>
```

The following example consists of a DIMS presentation that refers to images, an AMR clip and scene updates. The presentation is contained in a single Extended-presentation profile 3GP file containing:
- DIMS scene description (SVG scene) stored as item 1 identified by a Primary item box;
- DIMS updates stored as a DIMS track (track ID 1);
- AMR clip stored as an AMR track (track ID 2);
- Image files: "pic1.jpg", "pic2.jpg" and "pic3.jpg" stored as items 2, 3 and 4.

All references to the DIMS and AMR tracks and the images are made by relative URLs from the DIMS Unit in the primary item.

```
  <svg xmlns="http://www.w3.org/2000/svg" version="1.2" baseProfile="tiny"
    xmlns:xlink=http://www.w3.org/1999/xlink
    width="320" height="240" viewBox="0 0 320 240">
       <desc>DIMS example</desc>
       <updates xlink:href="#box=moov;track ID= 1" begin="10"/>
       <audio xlink:href="#box=moov;track_ID=2" audio-level="0.7"
         type="audio/AMR" begin="10"/>
       <image x="0" y="0" width="100" height="100" xlink:href="pic1.jpg">
       <image x="0" y="100" width=" 100" height="100" xlink:href="pic2.jpg">
       <image x="100" y="0" width=" 100" height="100" xlink:href="pic3.jpg">
  </svg>
```

An item information box specifies the MIME type of the scene description (SVG scene) and the filenames and MIME types of the image files. An Item location box specifies the locations of all items.

Javascript and scalable vector graphics (SVG) are currently extensively used in HTML to manipulate and present different multimedia components. The script is either externally referenced by a URL or embedded as part of the HTML page.

The syntax of a uniform resource locator (URL) is: scheme://[user:password@]domain:port/path?query_string#fragment_id The scheme defines how the resource will be obtained, such as http, https, ftp, file, and others. The domain name gives the destination location for the URL. The port number, given in decimal, is optional, and if omitted, the default for the scheme is used. The path is used to specify and perhaps find the resource requested. This path may or may not describe folders on the file system in the web server and it may be very different from the arrangement of folders on the web server. The query string contains data to be passed to software running on the server. It may contain name/value pairs separated by ampersands, for example ?first_name=John&last_name=Doe. The fragment identifier, if present, specifies a part or a position within the overall resource or document. *See, e.g.,* "Uniform Resource Locator" http://en.wikipedia.org/wiki/Uniform_resource_locator.

URL fragment identifiers (which may also be referred to as URL forms) may be specified for a particular content type to access a part of the resource, such as a file, indicated by the base part of the URL (without the fragment identifier). URL fragment identifiers may be identified for example by a hash ('#') character within the URL. For the ISOBMFF, it may be specified that URL fragments "#X" refers to a track with track_ID equal to X, "#item_ID=" and "#item_name=" refer to file level meta box(es), "#/item_ID=" and "#/item_name=" refer to the meta box(es) in the Movie box, and "#track_ID=X/item_ID=" and "#track_ID=X/item_name=" refer to meta boxes in the track with track_ID equal to X, including the meta boxes potentially found in movie fragments.

The latest version of the HEIF specification supports a generic extensible mechanism for derived images. A set of basic derived images (cropping, rotation by multiples of 90 degrees, tiling, and overlaying) has been specified in HEIF. Specifying other types of derived images as part of HEIF involves at least the following challenges:
- The type of the derived image should be generally applicable so as to have broad enough support to be standardized. Specialized image operations, e.g. applying only to a narrow use case, are likely not to be supported broadly enough.
- It takes a considerable amount of calendar time to standardize new features to HEIF due to the standardization process of ISO/IEC JTC1. A typical duration of a standardization project is about 2 years.
- The derived images in HEIF are specified by their syntax and semantics, where the semantics are typically specified with plain English. Complex image operations might be tough to be specified unambiguously with plain English.

Due to such reasons, it is desirable to have a generic flexible mechanism to specify new types of derived images without the need for modifying HEIF.

Scripting languages, such as JavaScript, are broadly supported by modern web browsers and operating systems. The use of scripting languages to define derived images is therefore appealing. However, scripts have been so far used for presenting media content rather than as representing and manipulating single images or image collections.

The derived image feature is tightly integrated into the concepts of HEIF and ISO Base Media File Format (ISOBMFF), *e.g.,* the item referencing of ISOBMFF is used to indicate the input images, and the derived images themselves can be used as input images for other derived images. There has been no consideration on the interfaces of how derived images specified using scripts could be integrated to HEIF and ISOBMFF.

Presently the derived images of HEIF are static in the sense that the respective output images only depend on the input images and the image operations stored in the file. Many times images are however displayed in a dynamic environment. For example, the size of the presentation window may be dynamically adjusted by the user, or the user may have means to interact with the displayed image (e.g., with a mouse pointer or touch interface).

The static nature of the derived images of HEIF also means that the derivation operation is assumed to be virtually immediate. The derived images currently do not have a duration and result into one output image only rather than a sequence of output images (*e.g.,* an animation).

Exemplary implementations of the invention provide the necessary mechanisms and structures to store dynamic derived images.

### BRIEF SUMMARY

Method, apparatuses, and computer program products are therefore provided according to example embodiments of the present invention provide the necessary mechanisms and structures to store dynamically generated derived images which can be generated during playback time as image items.

In one exemplary implementation a method of generating an image container file is provided that at least includes generating a first derived image item in which an image operation is defined using a general-purpose scripting format, wherein the image operation inputs one or more input images using a first pre-defined means of the general-purpose scripting format and provides an output image using a second pre-defined means of the general-purpose scripting format; and storing the first derived image item into the image container file. The method further comprises wherein the image container file conforms to a file format capable of storing a plurality of derived images into the image container file; and wherein a derived image comprises an image operation and represents the output image, the image operation is performed to the one or more input images indicated in the image container file, each of the one or more input images is a coded image or another derived image, and performing the image operation results into the output image.

In some exemplary implementations, the method may further include storing, into the image container file, a second derived image item for which the first derived image is an input image.

In some exemplary implementations, the method may further include providing one or more input parameters to the image operation of the first derived image, wherein values of the one or more input parameters are intended to be configurable when the image container file is played.

In another exemplary implementation a method is provided that at least includes obtaining an image container file as input; wherein the image container file conforms to a file format capable of storing a plurality of derived images into the image container file; and wherein a derived image comprises an image operation and represents an output image, the image operation is performed to one or more input images indicated in the image container file, each of the one or more input images is a coded image or another derived image, and performing the image operation results into the output image; parsing, from the image container file, that certain of the one or more input images are used by a first derived image in which the image operation is defined using a general-purpose scripting format; and decoding, from the image container file, the certain one or more input images.

The method further includes inputting the decoded certain one or more input images to the image operation of the first derived image using first pre-defined means of the general-purpose scripting format; performing the image operation of the first derived image; and obtaining the output image of the first derived image using second pre-defined means of the general-purpose scripting format.

In some exemplary implementations, the method may further include parsing, from the image container file, that the first derived image is a first input image for a second derived image; and performing the image operation of the second derived image for which the first input image is the output image of the first derived image obtained using the second pre-defined means of the general-purpose scripting format.

In some exemplary implementations, the method may further include inputting values of one or more input parameters to the image operation of the first derived image. In some embodiments, the method may further include inputting a URL with a fragment identifier and a query string, wherein the fragment identifier identifies the first derived image; and extracting the values of one or more input parameters from the query string.

In a further exemplary implementation an apparatus is provided that includes at least one processor and at least one memory including computer program instructions, the at least one memory and the computer program instructions, with the at least one processor, causing the apparatus at least to generate a first derived image item in which an image operation is defined using a general-purpose scripting format, wherein the image operation inputs one or more input images using a first pre-defined means of the general-purpose scripting format and provides an output image using a second pre-defined means of the general-purpose scripting format; and store the first derived image item into the image container file; wherein the image container file conforms to a file format capable of storing a plurality of derived images into the image container file; and wherein a derived image comprises an image operation and represents the output image, the image operation is performed to the one or more input images indicated in the image container file, each of the one or more input images is a coded image or another derived image, and performing the image operation results into the output image.

In some exemplary implementations the apparatus may further comprise the at least one memory and the computer program instructions, with the at least one processor, causing the apparatus to store, into the image container file, a second derived image item for which the first derived image is an input image.

In some exemplary implementations, the apparatus may further comprise the at least one memory and the computer program instructions, with the at least one processor, causing the apparatus to: provide one or more input parameters to the image operation of the first derived image, wherein values of the one or more input parameters are intended to be configurable when the image container file is played.

In another exemplary implementation an apparatus is provided that includes at least one processor and at least one memory including computer program instructions, the at least one memory and the computer program instructions, with the at least one processor, causing the apparatus at least to obtain an image container file as input; wherein the image container file conforms to a file format capable of storing a plurality of derived images into the image container file; and wherein a derived image comprises an image operation and represents an output image, the image operation is performed to one or more input images indicated in the image container file, each of the one or more input images is a coded image or another derived image, and performing the image operation results into the output image; parse, from the image container file, that certain of the one or more input images are used by a first derived image in which the image operation is defined using a general-purpose scripting format; and decode, from the image container file, the certain one or more input images. The at least one memory and the computer program instructions, with the at least one processor, further causing the apparatus to input the decoded certain one or more input images to the image operation of the first derived image using first pre-defined means of the general-purpose scripting format; perform the image operation of the first derived image; and obtain the output image of the first derived image using second pre-defined means of the general-purpose scripting format.

In some exemplary implementations, the apparatus may further comprise the at least one memory and the computer program instructions, with the at least one processor, causing the apparatus to: parse, from the image container file, that the first derived image is a first input image for a second derived image; and perform the image operation of the second derived image for which the first input image is the output image of the first derived image obtained using the second pre-defined means of the general-purpose scripting format.

In some exemplary implementations, the apparatus may further comprise the at least one memory and the computer program instructions, with the at least one processor, causing the apparatus to input values of one or more input parameters to the image operation of the first derived image.

In some exemplary implementation, the apparatus may further comprise the at least one memory and the computer program instructions, with the at least one processor, causing the apparatus to input a URL with a fragment identifier and a query string, wherein the fragment identifier identifies the first derived image; and extract the values of one or more input parameters from the query string.

In a further exemplary implementation, a computer program product is provided comprising at least one non-transitory computer-readable storage medium bearing computer program instructions embodied therein for use with a computer, the computer program instructions comprising program instructions for causing the computer to, when executed, at least: generate a first derived image item in which an image operation is defined using a general-purpose scripting format, wherein the image operation inputs one or more input images using a first pre-defined means of the general-purpose scripting format and provides an output image using a second pre-defined means of the general-purpose scripting format; and store the first derived image item into the image container file; wherein the image container file conforms to a file format capable of storing a plurality of derived images into the image container file; and wherein a derived image comprises an image operation and represents the output image, the image operation is performed to the one or more input images indicated in the image container file, each of the one or more input images is a coded image or another derived image, and performing the image operation results into the output image.

In another exemplary implementations, a computer program product is provided comprising at least one non-transitory computer-readable storage medium bearing computer program instructions embodied therein for use with a computer, the computer program instructions comprising program instructions for causing, when executed, the computer at least to: obtain an image container file as input; wherein the image container file conforms to a file format capable of storing a plurality of derived images into the image container file; and wherein a derived image comprises an image operation and represents an output image, the image operation is performed to one or more input images indicated in the image container file, each of the one or more input images is a coded image or another derived image, and performing the image operation results into the output image; parse, from the image container file, that certain of the one or more input images are used by a first derived image in which the image operation is defined using a general-purpose scripting format; decode, from the image container file, the certain one or more input images; input the decoded certain one or more input images to the image operation of the first derived image using first pre-defined means of the general-purpose scripting format; perform the image operation of the first derived image; and obtain the output image of the first derived image using second pre-defined means of the general-purpose scripting format

In a further exemplary implementation, an apparatus is provided that at least includes means for generating a first derived image item in which an image operation is defined using a general-purpose scripting format, wherein the image operation inputs one or more input images using a first pre-defined means of the general-purpose scripting format and provides an output image using a second pre-defined means of the general-purpose scripting format; and means for storing the first derived image item into the image container file; wherein the image container file conforms to a file format capable of storing a plurality of derived images into the image container file; and wherein a derived image comprises an image operation and represents the output image, the image operation is performed to the one or more input images indicated in the image container file, each of the one or more input images is a coded image or another derived image, and performing the image operation results into the output image.

In a further exemplaty implementations, an apparatus is provided that at least includes means for obtaining an image container file as input; wherein the image container file conforms to a file format capable of storing a plurality of derived images into the image container file; and wherein a derived image comprises an image operation and represents an output image, the image operation is performed to one or more input images indicated in the image container file, each of the one or more input images is a coded image or another derived image, and performing the image operation results into the output image; means for parsing, from the image container file, that certain of the one or more input images are used by a first derived image in which the image operation is defined using a general-purpose scripting format; means for decoding, from the image container file, the certain one or more input images; means for inputting the decoded certain one or more input images to the image operation of the first derived image using first pre-defined means of the general-purpose scripting format; means for performing the image operation of the first derived image; and means for obtaining the output image of the first derived image using second pre-defined means of the general-purpose scripting format.

### BRIEF DESCRIPTION OF THE DRAWINGS

Having thus described certain exemplary implementations of the invention in general terms, reference will now be made to the accompanying drawings, which are not necessarily drawn to scale, and wherein:
Figure 1 illustrates a block diagram of an apparatus that may be specifically configured in accordance with an example implementation of the present invention;
Figure 2 illustrates a high level conceptual referencing model of dynamically derived image items in accordance with an example implementation of the present invention;
Figure 3 illustrates a relational model of dynamically derived images in accordance with an example implementation of the present invention;
Figure 4 provides a flow chart illustrating operations for generating an image container file comprising dynamically derived image items performed by an apparatus in accordance with an example implementation of the present invention; and
Figure 5 provides a flow chart illustrating operations for obtaining output images of a derived image item performed by an apparatus in accordance with an example embodiment of the present invention.

### DETAILED DESCRIPTION

Some exemplary implementations of the present invention will now be described more fully hereinafter with reference to the accompanying drawings. Like reference numerals refer to like elements throughout. As used herein, the terms "data," "content," "information," and similar terms may be used interchangeably to refer to data capable of being transmitted, received and/or stored in accordance with embodiments of the present invention. Thus, use of any such terms should not be taken to limit the scope of exemplary implementations of the present invention.

Additionally, as used herein, the term 'circuitry' refers to (a) hardware-only circuit implementations (e.g., implementations in analog circuitry and/or digital circuitry); (b) combinations of circuits and computer program product(s) comprising software and/or firmware instructions stored on one or more computer readable memories that work together to cause an apparatus to perform one or more functions described herein; and (c) circuits, such as, for example, a microprocessor(s) or a portion of a microprocessor(s), that require software or firmware for operation even if the software or firmware is not physically present. This definition of 'circuitry' applies to all uses of this term herein, including in any claims. As a further example, as used herein, the term 'circuitry' also includes an implementation comprising one or more processors and/or portion(s) thereof and accompanying software and/or firmware. As another example, the term 'circuitry' as used herein also includes, for example, a baseband integrated circuit or applications processor integrated circuit for a mobile phone or a similar integrated circuit in a server, a cellular network device, other network device, and/or other computing device.

As defined herein, a "computer-readable storage medium," which refers to a non-transitory physical storage medium (e.g., volatile or non-volatile memory device), can be differentiated from a "computer-readable transmission medium," which refers to an electromagnetic signal.

Methods, apparatuses, and computer program products are provided in accordance with example implementations of the present invention to provide the necessary mechanisms and structures to store dynamic derived images.

Presently the derived images of HEIF are static in the sense that the respective output images only depend on the input images and the image operations stored in the file. Many times images are however displayed in a dynamic environment. For example, the size of the presentation window may be dynamically adjusted by the user, or the user may have means to interact with the displayed image (e.g., with a mouse pointer or touch interface). The static nature of the derived images of HEIF also means that the derivation operation is assumed to be virtually immediate. The derived images currently do not have a duration and result into one output image only rather than a sequence of output images (e.g., an animation).

New types of functionality for derived images might be achieved if dynamic parameters for them are enabled. The ability to store interactive dynamic images within a container file could offer the same interaction functionality in all types of players; i.e., the same functionality is reached when the derived image is presented by a web browser as an embedded part of a web page and when the derived image is presented, e.g., by a gallery application.

Exemplary implementations of the invention enable the storage of dynamically generated derived images which can be generated during playback time as image items. Image manipulation is performed by the usage of script-like interpretive languages, such as JavaScript and the like. While JavaScript is described in the example implementations herein, implementations of the present invention are not limited to the use of JavaScript. Embodiments of the invention enable the storage and/or referencing of such scripts as items inside media container files such as High Efficiency Image files.

In exemplary implementations of the invention, encapsulation rules are specified for scripting languages to specify derived images. For example, the encapsulation rules specify the interface for mapping input images, as defined in HEIF (with the item referencing mechanism), to image variables that are usable by the script and the interface for outputting an output image from the script so that the output image is usable by HEIF parsers, e.g., as input to other derived images.

In example implementations, one or more input parameters can be provided to a derived image, where the input parameters affect the image operation. The values of the input parameters can be given by external means, e.g., through an application programming interface (API) to an image file player. This mechanism enables dynamically changing derived image items. The mechanism also enables the dynamic selection of an input image to be used for the derived image, and hence the same derived image item can be used for producing different output images without any replication of the derivation operation for the sake of storage efficiency and modularity. Such dynamically derived items can be easily cascaded to form new representations during media playback.

In example implementations the same derivation operation can be encoded in one or more scripting languages. This enables the use of such derived images by many clients that may not all be capable of understanding a common scripting language. When such encodings are encapsulated in HEIF, these scripts shall be marked as being alternates of each other so that the client can know that only one of them needs interpretation.

Currently, methods such as using SMIL and SVG to store presentation formats are more concentrated on the presentation of the content, rather than manipulation or derivation of the content. Exemplary implementations of the present invention enable the content to be generated dynamically by preserving the original content (e.g., image blurring in a dynamic way); to be manipulated in a cascaded fashion (e.g., output derived image can be an input to another dynamically derived image); to be stored as a timed sequence track with external timing information; and/or to be embedded to modern web browsers easily by the usage of script languages such as JavaScript.

It is noted that the same security concerns of current browser/JavaScript vulnerabilities may also be applicable to exemplary implementations of the present invention, though no further vulnerability/concern is introduced by the embodiments themselves.

### Exemplary Apparatus

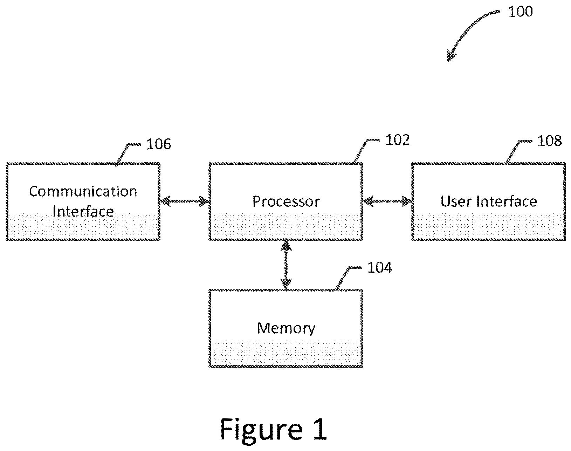

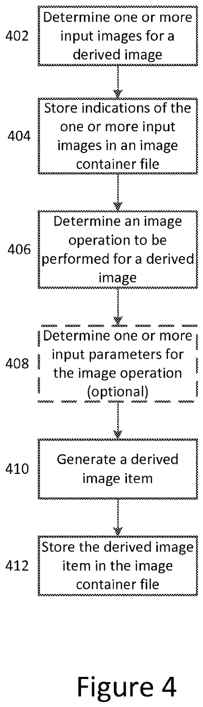

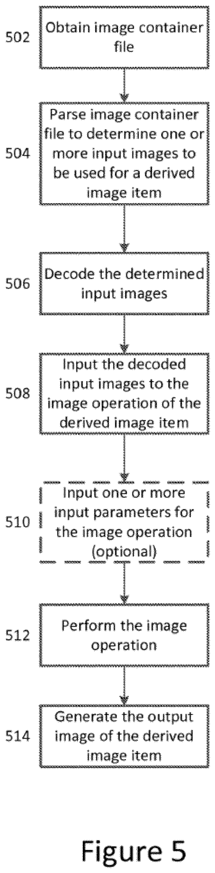

Figure 1 illustrates an example of an apparatus 100 that may be used in exemplary implementations of the present invention and that may perform one or more of the operations set forth by Figures 4 and 5 described below. In this regard, the apparatus may be embodied by the mobile device 104, end user device 110, or content server 106 of Figure 1.

It should also be noted that while Figure 1 illustrates one example of a configuration of an apparatus 100, numerous other configurations may also be used to implement exemplary embodiments of the present invention. As such, in some embodiments, although devices or elements are shown as being in communication with each other, hereinafter such devices or elements should be considered to be capable of being embodied within the same device or element and thus, devices or elements shown in communication should be understood to alternatively be portions of the same device or element.

Referring to Figure 1, the apparatus 100 in accordance with one example implementation may include or otherwise be in communication with one or more of a processor 102, a memory 102, a communication interface circuitry 106, and user interface circuitry 106.

In some exemplary implementations, the processor (and/or co-processors or any other processing circuitry assisting or otherwise associated with the processor) may be in communication with the memory device via a bus for passing information among components of the apparatus. The memory device may include, for example, a non-transitory memory, such as one or more volatile and/or non-volatile memories. In other words, for example, the memory device may be an electronic storage device (e.g., a computer readable storage medium) comprising gates configured to store data (e.g., bits) that may be retrievable by a machine (e.g., a computing device like the processor). The memory device may be configured to store information, data, content, applications, instructions, or the like for enabling the apparatus to carry out various functions in accordance with an example implementation of the present invention. For example, the memory device could be configured to buffer input data for processing by the processor 102. Additionally or alternatively, the memory device could be configured to store instructions for execution by the processor.

In some exemplary implementations, the apparatus 100 may be embodied as a chip or chip set. In other words, the apparatus may comprise one or more physical packages (e.g., chips) including materials, components and/or wires on a structural assembly (e.g., a baseboard). The structural assembly may provide physical strength, conservation of size, and/or limitation of electrical interaction for component circuitry included thereon. The apparatus may therefore, in some cases, be configured to implement an example of the present invention on a single chip or as a single "system on a chip." As such, in some cases, a chip or chipset may constitute means for performing one or more operations for providing the functionalities described herein.

The processor 102 may be embodied in a number of different ways. For example, the processor may be embodied as one or more of various hardware processing means such as a coprocessor, a microprocessor, a controller, a digital signal processor (DSP), a processing element with or without an accompanying DSP, or various other processing circuitry including integrated circuits such as, for example, an ASIC (application specific integrated circuit), an FPGA (field programmable gate array), a microcontroller unit (MCU), a hardware accelerator, a special-purpose computer chip, or the like. As such, in some exemplary implementations, the processor may include one or more processing cores configured to perform independently. A multi-core processor may enable multiprocessing within a single physical package. Additionally or alternatively, the processor may include one or more processors configured in tandem via the bus to enable independent execution of instructions, pipelining and/or multithreading.

In an example embodiment, the processor 102 may be configured to execute instructions stored in the memory device 104 or otherwise accessible to the processor. Alternatively or additionally, the processor may be configured to execute hard coded functionality. As such, whether configured by hardware or software methods, or by a combination thereof, the processor may represent an entity (e.g., physically embodied in circuitry) capable of performing operations according to an embodiment of the present invention while configured accordingly. Thus, for example, when the processor is embodied as an ASIC, FPGA or the like, the processor may be specifically configured hardware for conducting the operations described herein. Alternatively, as another example, when the processor is embodied as an executor of software instructions, the instructions may specifically configure the processor to perform the algorithms and/or operations described herein when the instructions are executed. However, in some cases, the processor may be a processor of a specific device configured to employ an exemplary implementation of the present invention by further configuration of the processor by instructions for performing the algorithms and/or operations described herein. The processor may include, among other things, a clock, an arithmetic logic unit (ALU) and logic gates configured to support operation of the processor.

Meanwhile, the communication interface 106 may be any means such as a device or circuitry embodied in either hardware or a combination of hardware and software that is configured to receive and/or transmit data from/to a network and/or any other device or module in communication with the apparatus 100. In this regard, the communication interface may include, for example, an antenna (or multiple antennas) and supporting hardware and/or software for enabling communications with a wireless communication network. Additionally or alternatively, the communication interface may include the circuitry for interacting with the antenna(s) to cause transmission of signals via the antenna(s) or to handle receipt of signals received via the antenna(s). In some environments, the communication interface may alternatively or also support wired communication. As such, for example, the communication interface may include a communication modem and/or other hardware/software for supporting communication via cable, digital subscriber line (DSL), universal serial bus (USB) or other mechanisms.

The apparatus 100 may include user interface 108 that may, in turn, be in communication with the processor 102 to provide output to the user and, in some exemplary implementations, to receive an indication of a user input. For example, the user interface may include a display and, in some exemplary implementations, may also include a keyboard, a mouse, a joystick, a touch screen, touch areas, soft keys, a microphone, a speaker, or other input/output mechanisms. The processor may comprise user interface circuitry configured to control at least some functions of one or more user interface elements such as a display and, in some exemplary implementations, a speaker, ringer, microphone and/or the like. The processor and/or user interface circuitry comprising the processor may be configured to control one or more functions of one or more user interface elements through computer program instructions (e.g., software and/or firmware) stored on a memory accessible to the processor (e.g., memory 104, and/or the like).

### Dynamically Derived Images

In example implementations, dynamically derived images have the following common properties: a set of parameters to indicate input image(s) and image operation/manipulation parameter sets; and a script-interpretive instruction set which, when interpreted and run, provides functions/operations to process the input image(s).

A file creator may include in a container file, and/or a file player may parse and reconstruct from a container file, a dynamically derived image with the above mentioned common properties using mechanisms of the container file format. For example, for indicating input image(s), the item referencing mechanism of the ISOBMFF may be used as specified in HEIF for derived images, and the script-interpretative instructions may be included in or referred to by the dynamically derived image. In some cases, the script for a dynamically derived image may be a separate item or multiple items that are linked to, e.g., using the item referencing mechanism, the dynamically derived image item.

In example implementations, dynamically derived images may also have zero or more of the following properties:
- A set of input parameters affecting the operation of the script;
- Timing information, either implicit or explicitly given as input parameter, affecting the operation of the script; and
- Display or composition information that may specify how the derived image is presented.

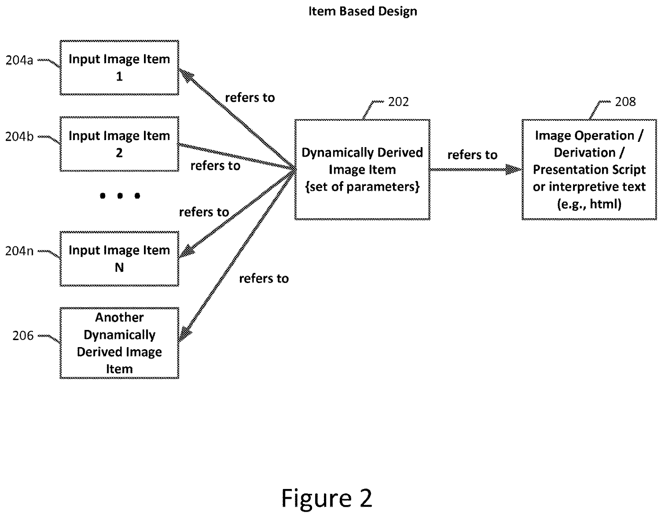

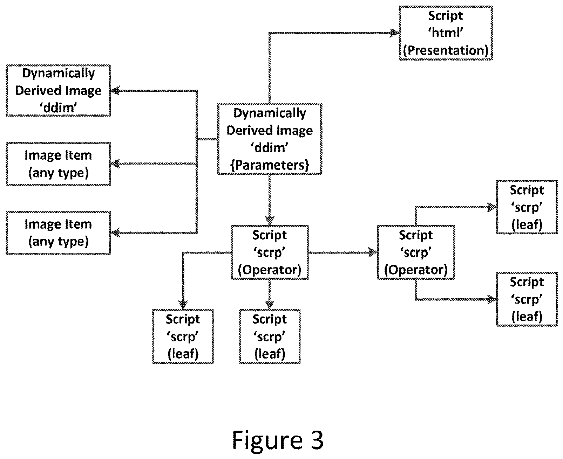

Figures 2 and 3 provide illustrations of the storage mechanism of dynamically derived images as items in a metabox according to an example embodiment.

Figure 2 provides a high level conceptual referencing model of dynamically derived image items. As illustrated in Figure 2, a dynamically derived image item, such as dynamically derived image item 202, may contain or be associated with a set of parameters. The dynamically derived image item refers to one or more input items, such as input image items 1 through N, 204a-204n, or another dynamically derived image item 206. The dynamically derived image item may also refer to one or more interpretive scripts, 208, which may define an image operation, the derivation operation, and/or presentation mechanism.

Figure 3 illustrates a relational model of dynamically derived images. A dynamically derived image item is an item of a particular type, such as 'ddim'. A dynamically derived image item may contain and/or be associated with a set of parameters. The input images are referred to by using particular reference types (e.g.,'dimg' or 'ddim'). The interpretive-script which defines the derivation operation is stored as another item with a specific type (e.g., 'scrp'), which in some cases may indicate the used scripting language. In some exemplary implementations, the type may also or alternatively indicate specific constraints on the use of the scripting language. An operation may refer to other scripts which can be shared by different operators (i.e., leaf items). The interpretive script which may define a presentation mechanism is stored as another item with a specific type (e.g., 'html'). Item referencing order is the same as the input parameter order of the interpretive-script.

In some exemplary implementations, the type of the dynamically derived image item may indicate the scripting language used to specify the dynamically derived image item, e.g., a particular four-character code, such as 'javs' may indicate an item specified using JavaScript. In some embodiments, the type may also or alternatively indicate specific constraints on the use of the scripting language.

In some exemplary implementations, the interpretive-script may be stored as a data structure inside the dynamically derived image item. If the same interpretive-script is shared in two or more derived image items, extents may be used to define the image item so that the container file contains the interpretive-script only once and some of the derived image items include the interpretive-script in the item by referring to the byte range containing the interpretive-script.

In some exemplary implementations, a first dynamically derived image is defined using a first scripting language, such as JavaScript for example, and a second dynamically derived image is defined into the same container file using a second scripting language, such as Python for example. The relation of the first and second dynamically derived images may be indicated in the container file, for example, by using the entity grouping mechanism. For example, the first and second dynamically derived images may be indicated to be alternatives (i.e., only one of them should be played, while they need not represent exactly the same content) or equivalent (the first and second dynamically derived images are equivalent, i.e., are essentially or exactly identical). A file player may parse the entity groups (if any), and based on the entity groups (if any) and the supported scripting languages, determine which dynamically derived image is to be reconstructed and displayed. For example, if a container file comprises first dynamically derived image and a second dynamically derived image which are in the same alternate group, the file player may choose one of the first dynamically derived image and the second dynamically derived images for reconstruction and displaying, e.g., whichever better suits the file player's capabilities and configurations.

### Stateful Derived Images

Currently, HEIF derived images are stateless, i.e. there is one and only one output image resulting from the image operation of the derived image. According to some exemplary implementations, a stateful derived image may be defined so that the output image depends on at least one state variable. State variables may, for example, include one or more of: relative time, absolute time, or a sequence number (within a derivation chain). The state variables may be given as input parameters or may be implicit. An example of the latter case is time, which may be implicitly obtained, e.g., using the system clock. Relative time may be implicitly obtained so that the first invocation of the derivation of the derived image resets the clock and the relative time is then obtained as a difference compared to the time of this first invocation. In some exemplary implementations, the execution of a stateful derived image may be controlled externally, e.g., by a player application. For example, the player application may include a timed loop for sequential execution of the image operation with the given input parameters (e.g., a sequence number) and obtaining the respective output image. In other cases, the execution of a stateful derived image may be controlled by the script of the derived image itself. For example, the script of the derived image may include a loop for sequential execution of the included image operation and obtaining the respective output image. The loop may be timed (i.e. be performed at a certain pace or frequency) or it may be untimed.

In some exemplary implementations, stateful derived images may be used to create an animated image item. The input parameters to stateful derived images may include duration, which may be used to define the duration of the animation specified by the stateful derived image. Stateful derived images may be configured or indicated to be repeatable, i.e. the states can wrap over to the beginning. This feature may be used, for example, for looping an animation.

In some exemplary implementations, a stateful derived image may be used as an input image for a second derived image. The second derived image is implicitly also stateful and inherits the state of the input image. For example, a stateful derived image may define an animation and may be provided to a second derived image of the type 'irot' (rotation by an integer multiple of 90 degrees) as input. In this example, the second derived image hence shares the state of the stateful derived image.

### Multiple Output Images

A basic design choice in the derived image feature of HEIF is that the image operation included in the derived image item results into one output image. As a consequence, a derived image item can be used as an input image to another derived image.

For a seamless integration with the derived image feature of HEIF, a dynamically derived image may be constrained, for example in a file format standard, to result into one output image. However, in general the present invention may be applied to dynamically derived images that result into more than one output image. In the case of stateful derived images, a derived image item may resolve into multiple output images, each representing a different state. Each such output image may be associated with the respective state information.

### Exemplary specification of Javascript Derived Images for HEIF

In some exemplary implementations, JavaScript may be used as the scripting language for defining dynamically derived images. In some exemplary implementations, based on the relationship model described above (in regard to Figure 2 and Figure 3), the following definitions and limitations can be applicable to the JavaScript derived images:
1. Script definitions are encapsulated using HTML <script> tag which is used to define a client-side script.
2. Each item in the HEIF file may be accessible using the URL forms for meta boxes as defined in the ISOBMFF.
   a. For example, a simple script item that is a leaf script with item id = 1001 in a HEIF file named as ImageFile.heif, which resides at server MyServer.com can be referred to as: **http://MyServer.com/ImageFile.heif#item_id=1001**
   b. Another representation may be as follows: **http://MyServer.com/ImageFile.heif?item_id=1001**
   c. If the referred script is present in the file system, than a **file://** context can also be used in the URL.
   d. Item_name can also be used instead of item_id.
3. If a script item or script-based dynamically derived image item internally refers to other script items for the sake of inclusion of functions, the "src" attribute of the <script> tag shall contain either the item id as "#item_id=<n>" or item name as "#item_name=<name>" which is unique and defined in a unique location in the file; such as, but not limited to, the item information box. Any other file-external referral should follow the method as defined in 2 above.
4. A general purpose "Helper Javascript library" could be defined that provides basic functionality to parse/access and compose HEIF files. This script can be defined outside of the HEIF file and referred to with a proper URL inside any script. The helper library may include, but is not limited to, the following functionalities:
   a. Read an Image Item in the HEIF file, given its item_id or item_name.
   b. Read any item that is a data structure, given its item id or item_name and item_type
   c. Parse item references and identify input image or item ids in the order given in the referencing mechanism, such as, but not limited to, reference order in the item reference box.
5. Each Dynamically Derived Image script shall have a single function that defines an entry point for the operation. It may internally call other functions defined in any referred operator item or leaf script.
6. Each Dynamically Derived Image Script's entry function may include a possible input parameter set, for example, but not limited to, using one or more of the following means:
   a. An item ID and a set of parameters:
      i. Item ID refers to the Dynamically Derived Image's own unique ID, which can be used to identify the referenced images and items.
      ii. Parameter set refers to a set of input parameters. An example can be the 'degree' of rotation for a rotation operation. Another example can be the duration of derivation operation, where a stateful derived image is considered.
   b. Only a set of parameters:
      i. Item ID can be self-extracted by the function via the usage of a HEIF Helper Javascript API, where a function call can return the item ID of the current Dynamically Derived Image. Then, the list of referenced items can be retrieved as defined in 6.a.i above.
      ii. Parameter set as defined in 6.a.ii.
   c. Input Images and a set of parameters:
      i. An array of already decoded image bitmap buffers can be input to the Dynamically Derived Image Script.
      ii. Parameter set as defined on 6.a.ii.
7. Each Dynamically Derived Image Script can generate an output as follows:
   a. A single image bitmap can be returned when the script is generating a stateless derived image.
   b. An array of output image buffers can be returned when the script generates a stateful derived image. The presentation logic may select one of the returned buffers to display the image based on a duration control mechanism.
   c. A pair comprised of an image bitmap buffer and a state information (such as, but not limited to, duration). In such a case, the script can be fed with a state parameter set that generates the desired image which corresponds to the desired state.
8. Each Dynamically Derived Image may contain a script which only defines a presentation logic, such as HTML or CSS code snippet. In such a case, the dynamically derived image script is embedded into this HTML representation and accessed via the dynamically derived image item. In such a case, the representation defines properties such as, but not limited to, layout, display width and height, grids, canvas orientation, etc.

The following provides an example of a Dynamically Derived Image that defines a rotation operation and then a cropping, according to an example implementation.

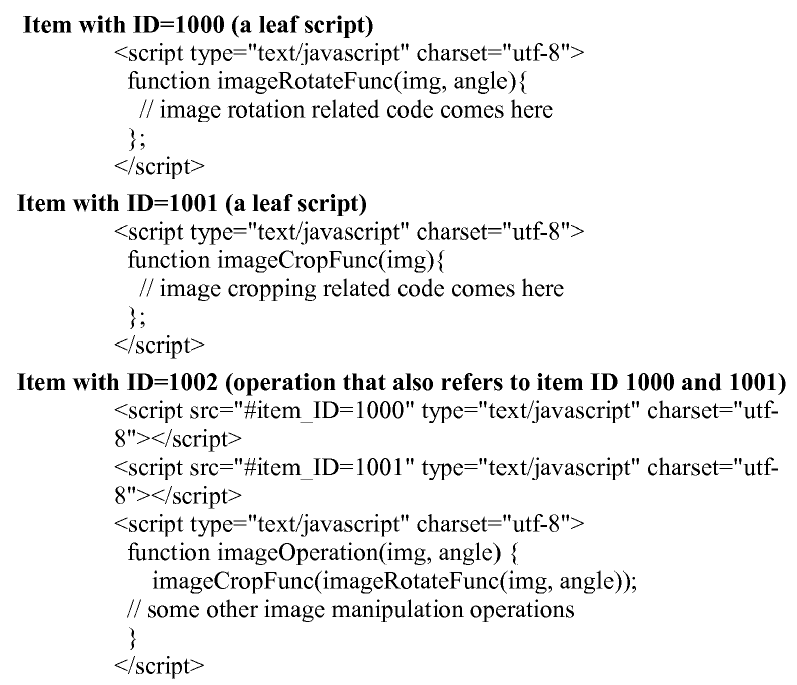

The following provides an example of a Dynamically Derived Image that references a HEIF Helper JavaScript API, according to an example implementation.

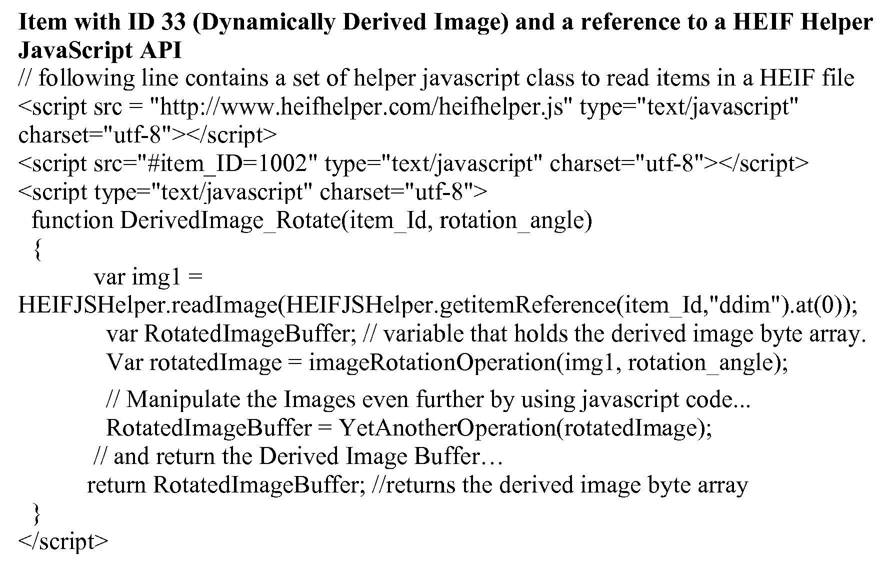

### Passing input parameters with URL query strings

In some exemplary implementations, when the URL fragment is used to identify a derived image within a HEIF file, it can be specified that the URL query string, if any, gives the values of the input parameters for the image operation of the derived image. For example, if the derived image takes one input parameter, say rotation angle in terms of degrees, as input, a query string ?rotation_angle=<angle> can be included in the URL. For example, a URL of the derived image like the following could be given: http://example.com/heif_file.heif?rotation_angle=37#item_ID=33 This URL refers to the derived image having item ID equal to 33 within the image container file named heif file.heif and in the derivation process it uses a rotation angle equal to 37 degrees. It is noted that it is possible to create URLs dynamically, e.g., in a web page, so the rotation angle can be determined, e.g., based on user interaction.

### Server-side vs. Client-side Scripting

In some exemplary implementations, it may be pre-defined, for example in a file format standard, whether the scripts are performed as server-side scripts, when possible, or as client-side scripts. In some exemplary implementations, it may be indicated in the container file whether the scripts are performed as server-side scripts, when possible, or as client-side scripts. The scope of such an indication may be the whole file, i.e. all dynamically derived images of the file, or the indication may be performed on finer granularity, such as per dynamically derived image. In some exemplary implementations, it may be configured by external means, such as a web page containing a URL (with a URL form) to a dynamically derived image, whether it is executed as a server-side script or a client-side script. Any combination of these mentioned exemplary implementations, is also possible. For example, one approach may apply to a first dynamically derived image of a file, while another approach may apply to a second dynamically derived image of the same file.

In some exemplary implementations, when server-side scripting is in use, the dynamically derived image may be reconstructed in a server and the reconstructed image may be provided to the client. The reconstructed image may be represented with a lossy or lossless image coding format.

In some exemplary implementations, when client-side scripting is in use, the dynamically derived image may be reconstructed in a client from a container file that at least comprises the dynamically derived image and all its direct and indirect input images.

### Example Operations for Generating an Image Container File

Figure 4 provides a flow chart illustrating operations for generating an image container file comprising dynamic derived image items in accordance with an example implementation of the present invention.

In this regard, an apparatus, such as apparatus 100, may include means, such as the processor 102, memory 104, communication interface 106, user interface 108, or the like, for determining one or more input images for a derived image, as shown in block 402 of Figure 4. The one or more input images may be coded images and/or another derived image. As shown in block 404, the apparatus 100 may include means, such as processor 102, memory 104, communication interface 106, user interface 108, or the like, for storing the indications of the input images in a container file.

As shown in block 406, the apparatus 100 may also include means, such as the processor 102, memory 104, communication interface 106, user interface 108, or the like, for determining an image operation to be performed for a derived image. In some exemplary implementations, the apparatus may optionally determine one or more input parameters for the image operation, as shown in block 408, where the input parameters may be used for generation of output images when the image file container is played.

As shown in block 410, the apparatus 100 may also include means, such as the processor 102, memory 104, communication interface 106, user interface 108, or the like, for generating a derived image item defining the image operation to be performed on one or more of the indicated input images. The image operation may be defined using a general-purpose scripting format, for example, JavaScript in some embodiments. As shown in block 412, the apparatus 100 may also include means, such as the processor 102, memory 104, communication interface 106, user interface 108, or the like, for storing the derived image item in the image container file. In some embodiments, additional derived image items may be generated and stored in the image container file, wherein an earlier derived image item in the image container file is the input image for the additional derived image item. The derived image item may then be used in generating output images when the image container file is played.

### Example Operations for Generating Output of Derived Images

Figure 5 provides a flow chart illustrating operations for generating an output image of a derived image item stored in an image container file in accordance with an example implementation of the present invention.

In this regard, an apparatus, such as apparatus 100, may include means, such as the processor 102, memory 104, communication interface 106, user interface 108, or the like, for obtaining an image container file as input for playback, as shown in block 502 of Figure 5, wherein the image file container may store any number of derived images. As shown in block 504, the apparatus 100 may include means, such as processor 102, memory 104, communication interface 106, user interface 108, or the like, for parsing the image file to determine certain of the one or more input images indicated in the image container file are used by a derived image item.

As shown in block 506, the apparatus 100 may also include means, such as the processor 102, memory 104, communication interface 106, user interface 108, or the like, for decoding the certain one or more input images from the image container file. As shown in block 508, the apparatus 100 may also include means, such as the processor 102, memory 104, communication interface 106, user interface 108, or the like, for inputting the decoded input images to an image operation of the derived image item, for example using a first process of the general-purpose scripting format that defines the image operation. In some exemplary implementations, the apparatus may optionally determine one or more input parameters for the image operation, as shown in block 510. In some exemplary implementations, a URL comprising a fragment identifier and a query string may be provided as input, where the fragment identifier identifies the derived image item and input parameter values may be extracted from the parameters of the query string.

As shown in block 512, the apparatus 100 may also include means, such as the processor 102, memory 104, communication interface 106, user interface 108, or the like, for performing the image operation of the derived image item. As shown in block 514, the apparatus 100 may also include means, such as the processor 102, memory 104, communication interface 106, user interface 108, or the like, for generating the output image of the derived image, for example using a second process of the general-purpose scripting format that defines the image operation.

In some exemplary implementations, the image container file may indicate that the output of the derived image item is the input image for an additional derived image item in the image container file. In such exemplary implementations, the apparatus 100 may also include means, such as the processor 102, memory 104, communication interface 106, user interface 108, or the like, for inputting the output image of the derived image item as an input image for the additional derived image item and performing the image operation of the additional derived image item.

As described above, Figures 4 and 5 illustrate flowcharts of an apparatus, method, and computer program product according to example implementations of the invention. It will be understood that each block of the flowchart, and combinations of blocks in the flowchart, may be implemented by various means, such as hardware, firmware, processor, circuitry, and/or other devices associated with execution of software including one or more computer program instructions. For example, one or more of the procedures described above may be embodied by computer program instructions. In this regard, the computer program instructions which embody the procedures described above may be stored by a memory 104 of an apparatus employing an exemplary implementation of the present invention and executed by a processor 102 of the apparatus. As will be appreciated, any such computer program instructions may be loaded onto a computer or other programmable apparatus (e.g., hardware) to produce a machine, such that the resulting computer or other programmable apparatus implements the functions specified in the flowchart blocks. These computer program instructions may also be stored in a computer-readable memory that may direct a computer or other programmable apparatus to function in a particular manner, such that the instructions stored in the computer-readable memory produce an article of manufacture the execution of which implements the function specified in the flowchart blocks. The computer program instructions may also be loaded onto a computer or other programmable apparatus to cause a series of operations to be performed on the computer or other programmable apparatus to produce a computer-implemented process such that the instructions which execute on the computer or other programmable apparatus provide operations for implementing the functions specified in the flowchart blocks.

Accordingly, blocks of the flowchart support combinations of means for performing the specified functions and combinations of operations for performing the specified functions for performing the specified functions. It will also be understood that one or more blocks of the flowchart, and combinations of blocks in the flowchart, can be implemented by special purpose hardware-based computer systems which perform the specified functions, or combinations of special purpose hardware and computer instructions.

In some exemplary implementations, certain ones of the operations above may be modified or further amplified. Furthermore, in some exemplary implementations, additional optional operations may be included, such as shown by the blocks with dashed outlines. Modifications, additions, or amplifications to the operations above may be performed in any order and in any combination.

Therefore, it is to be understood that the invention is not to be limited to the specific exemplary implementations disclosed and that modifications and other embodiments are intended to be included within the scope of the appended claims. In this regard, for example, different combinations of elements and/or functions than those explicitly described above are also contemplated as may be set forth in some of the appended claims. Although specific terms are employed herein, they are used in a generic and descriptive sense only and not for purposes of limitation.

## Claims

1. A method of generating an image container file comprising:
generating a first stateful derived image item (202) in which an image operation is defined using a general-purpose scripting language, wherein the image operation inputs one or more input images (204a - 204n) using a first pre-defined script of the general-purpose scripting language and provides an output image using a second pre-defined script of the general-purpose scripting language, wherein the output image is dependent on at least one state variable of the input image;
storing the first stateful derived image (202) item into the image container file; wherein the image container file conforms to a file format capable of storing a plurality of stateful derived images into the image container file; and
wherein a stateful derived image (202) comprises an image operation and represents an output image, the image operation is performed to the one or more input images (204a - 204n) indicated in the image container file, each of the one or more input images (204a - 204n) is a coded image or another derived image having one or more states, and performing the image operation results into an output image of respective state.

2. The method according to Claim 1 further comprising:
storing, into the image container file, a second stateful derived image item for which the first stateful derived image (202) is an input image.

3. The method according to Claim 1 further comprising:
providing one or more input parameters to the image operation of the first stateful derived image (202), wherein values of the one or more input parameters are intended to be configurable when the image container file is played.

4. A method according to claim 1, further comprising:
obtaining an image container file as input;
wherein the image container file conforms to a file format capable of storing a plurality of stateful derived images into the image container file; and
wherein a stateful derived image comprises an image operation and represents an output image, the image operation is performed to one or more input images (204a - 204n) indicated in the image container file, each of the one or more input images (204a - 204n) is a coded image or another derived image, and performing the image operation results into the output image;
parsing, from the image container file, that certain of the one or more input images are used by a first stateful derived image in which the image operation is defined using a general-purpose scripting language;
decoding, from the image container file, the certain one or more input images (204a - 204n);
inputting the decoded certain one or more input images to the image operation of the first stateful derived image (202) using first pre-defined script of the general-purpose scripting language;
performing the image operation of the first stateful derived image (202); and
obtaining the output image of the first stateful derived image (202) using second pre-defined script of the general-purpose scripting language.

5. The method according to Claim 4 further comprising:
parsing, from the image container file, that the first stateful derived image (202) is a first input image for a second stateful derived image; and
performing the image operation of the second stateful derived image for which the first input image is the output image of the first stateful derived image (202) obtained using the second pre-defined script of the general-purpose scripting language.

6. The method according to Claim 4 further comprising:
inputting values of one or more input parameters to the image operation of the first stateful derived image.

7. The method according to Claim 6 further comprising:
generating a URL defining values of one or more input parameters with a fragment identifier and a query string, wherein the fragment identifier identifies the first stateful derived image; and
extracting the values of one or more input parameters from the query string.

8. A computer program product comprising at least one non-transitory computer-readable storage medium bearing computer program instructions embodied therein for use with a computer, the computer program instructions comprising program instructions which when executed by the computer perform a method according to at least one of claims 1 to 7.

9. An apparatus comprising:
means for generating a first stateful derived image item (202) in which an image operation is defined using a general-purpose scripting language, wherein the image operation inputs one or more input images (204a - 204n) using a first pre-defined script of the general-purpose scripting language and provides an output image using a second pre-defined script of the general-purpose scripting language, wherein the output image is dependent on at least one state variable of the input image; and
means for storing the first stateful derived image (202) item into the image container file; wherein the image container file conforms to a file format capable of storing a plurality of stateful derived images into the image container file; and
wherein a stateful derived image comprises an image operation and represents an output image, the image operation is performed to the one or more input images (204a - 204n) indicated in the image container file, each of the one or more input images (204a - 204n) is a coded image or another derived image having one or more states, and performing the image operation results into an output image of respective state.

10. The apparatus according to Claim 9 further comprising:
means for storing, into the image container file, a second stateful derived image item for which the first stateful derived image (202) is an input image.

11. The apparatus according to Claim 9 further comprising:
means for providing one or more input parameters to the image operation of the first stateful derived image (202), wherein values of the one or more input parameters are intended to be configurable when the image container file is played.

12. An apparatus according to claim 9, further comprising:
means for obtaining an image container file as input;
wherein the image container file conforms to a file format capable of storing a plurality of stateful derived images into the image container file; and
wherein a derived image comprises an image operation and represents an output image, the image operation is performed to one or more input images (204a - 204n) indicated in the image container file, each of the one or more input images (204a - 204n) is a coded image or another stateful derived image, and performing the image operation results into the output image;
means for parsing, from the image container file, that certain of the one or more input images (204a - 204n) are used by a first stateful derived image in which the image operation is defined using a general-purpose scripting language;
means for decoding, from the image container file, the certain one or more input images (204a - 204n);
means for inputting the decoded certain one or more input images (204a - 204n) to the image operation of the first stateful derived image (202) using first pre-defined script of the general-purpose scripting language;
means for performing the image operation of the first stateful derived image (202); and
means for obtaining the output image of the first stateful derived image (202) using second pre-defined script of the general-purpose scripting language.

13. The apparatus according to Claim 12 further comprising:
means for parsing, from the image container file, that the first stateful derived image (202) is a first input image for a second stateful derived image; and
means for performing the image operation of the second stateful derived image for which the first input image is the output image of the first stateful derived image (202) obtained using the second pre-defined script of the general-purpose scripting language.

14. The apparatus according to Claim 12 further comprising:
means for inputting values of one or more input parameters to the image operation of the first stateful derived image (202).

15. The apparatus according to Claim 14 further comprising:
means for generating a URL defining values of one or more input parameters with a fragment identifier and a query string, wherein the fragment identifier identifies the first stateful derived image (202); and
means for extracting the values of one or more input parameters from the query string.

## Patentansprüche

1. Verfahren zur Generierung einer Bildcontainerdatei, umfassend:
Generieren eines ersten zustandsabhängigen abgeleiteten Bildelements (202), in welchem eine Bildoperation unter Verwendung einer universellen Skriptsprache definiert wird, wobei die Bildoperation ein oder mehrere Eingabebilder (204a - 204n) unter Verwendung eines ersten vordefinierten Skripts der universellen Skriptsprache eingibt und ein Ausgabebild unter Verwendung eines zweiten vordefinierten Skripts der universellen Skriptsprache bereitstellt, wobei das Ausgabebild von mindestens einer Zustandsvariablen des Eingabebildes abhängt;
Speichern des ersten zustandsabhängigen abgeleiteten Bildelements (202) in der Bildcontainerdatei; wobei die Bildcontainerdatei einem Dateiformat entspricht, das zum Speichern einer Mehrzahl von zustandsabhängigen abgeleiteten Bildern in der Bildcontainerdatei imstande ist; und
wobei ein zustandsabhängiges abgeleitetes Bild (202) eine Bildoperation umfasst und ein Ausgabebild darstellt, die Bildoperation an dem einen oder den mehreren Eingabebildern (204a - 204n) durchgeführt wird, die in der Bildcontainerdatei angegeben werden, jedes des einen oder der mehreren Eingabebilder (204a - 204n) ein codiertes Bild oder ein anderes abgeleitetes Bild mit einem oder mehreren Zuständen ist, und das Durchführen der Bildoperation zu einem Ausgabebild eines jeweiligen Zustands führt.

2. Verfahren nach Anspruch 1, ferner umfassend:
Speichern eines zweiten zustandsabhängigen abgeleiteten Bildelements, für welches das erste zustandsabhängige abgeleitete Bild (202) ein Eingabebild ist, in der Bildcontainerdatei.

3. Verfahren nach Anspruch 1, ferner umfassend:
Bereitstellen eines oder mehrerer Eingabeparameter für die Bildoperation des ersten zustandsabhängigen abgeleiteten Bildes (202), wobei Werte des einen oder der mehreren Eingabeparameter konfigurierbar sein sollen, wenn die Bildcontainerdatei wiedergegeben wird.

4. Verfahren nach Anspruch 1, ferner umfassend:
Erhalten einer Bildcontainerdatei als Eingabe;
wobei die Bildcontainerdatei einem Dateiformat entspricht, das zum Speichern einer Mehrzahl von zustandsabhängigen abgeleiteten Bildern in der Bildcontainerdatei imstande ist; und
wobei ein zustandsabhängiges abgeleitetes Bild eine Bildoperation umfasst und ein Ausgabebild darstellt, die Bildoperation an dem einen oder den mehreren Eingabebildern (204a - 204n) durchgeführt wird, die in der Bildcontainerdatei angegeben werden, jedes des einen oder der mehreren Eingabebilder (204a - 204n) ein codiertes Bild oder ein anderes abgeleitetes Bild ist, und das Durchführen der Bildoperation zum Ausgabebild führt;
Parsen aus der Bildcontainerdatei, dass bestimmte des einen oder der mehreren Eingabebilder durch ein erstes zustandsabhängiges abgeleitetes Bild verwendet werden, in welchem die Bildoperation unter Verwendung einer universellen Skriptsprache definiert wird;
Decodieren des einen oder der mehreren bestimmten Eingabebilder (204a - 204n) aus der Bildcontainerdatei;
Eingeben des einen oder der mehreren decodierten bestimmten Eingabebilder in die Bildoperation des ersten zustandsabhängigen abgeleiteten Bildes (202) unter Verwendung eines ersten vordefinierten Skripts der universellen Skriptsprache;
Durchführen der Bildoperation des ersten zustandsabhängigen abgeleiteten Bildes (202); und
Erhalten des Ausgabebildes des ersten zustandsabhängigen abgeleiteten Bildes (202) unter Verwendung eines zweiten vordefinierten Skripts der universellen Skriptsprache.

5. Verfahren nach Anspruch 4, ferner umfassend:
Parsen aus der Bildcontainerdatei, dass das erste zustandsabhängige abgeleitete Bild (202) ein erstes Eingabebild für ein zweites zustandsabhängiges abgeleitetes Bild ist; und
Durchführen der Bildoperation des zweiten zustandsabhängigen abgeleiteten Bildes, für welches das erste Eingabebild das Ausgabebild des ersten zustandsabhängigen abgeleiteten Bildes (202) ist, das unter Verwendung des zweiten vordefinierten Skripts der universellen Skriptsprache erhalten wird.

6. Verfahren nach Anspruch 4, ferner umfassend:
Eingeben von Werten eines oder mehrerer Eingabeparameter in die Bildoperation des ersten zustandsabhängigen abgeleiteten Bildes.

7. Verfahren nach Anspruch 6, ferner umfassend:
Generieren einer URL, welche Werte eines oder mehrerer Eingabeparameter mit einer Fragmentkennung und einer Abfragezeichenfolge definiert, wobei die Fragmentkennung das erste zustandsabhängige abgeleitete Bild definiert; und
Extrahieren der Werte eines oder mehrerer Eingabeparameter aus der Abfragezeichenfolge.

8. Computerprogrammprodukt, umfassend mindestens ein nicht-transitorisches computerlesbares Speichermedium, das Computerprogrammanweisungen zur Verwendung mit einem Computer trägt, die darin enthalten sind, wobei die Computerprogrammanweisungen Programmanweisungen umfassen, die bei Ausführung durch den Computer ein Verfahren nach mindestens einem der Ansprüche 1 bis 7 durchführen.

9. Vorrichtung, umfassend:
Mittel zum Generieren eines ersten zustandsabhängigen abgeleiteten Bildelements (202), in welchem eine Bildoperation unter Verwendung einer universellen Skriptsprache definiert wird, wobei die Bildoperation ein oder mehrere Eingabebilder (204a - 204n) unter Verwendung eines ersten vordefinierten Skripts der universellen Skriptsprache eingibt und ein Ausgabebild unter Verwendung eines zweiten vordefinierten Skripts der universellen Skriptsprache bereitstellt, wobei das Ausgabebild von mindestens einer Zustandsvariablen des Eingabebildes abhängt; und
Mittel zum Speichern des ersten zustandsabhängigen abgeleiteten Bildelements (202) in der Bildcontainerdatei; wobei die Bildcontainerdatei einem Dateiformat entspricht, das zum Speichern einer Mehrzahl von zustandsabhängigen abgeleiteten Bildern in der Bildcontainerdatei imstande ist; und
wobei ein zustandsabhängiges abgeleitetes Bild eine Bildoperation umfasst und ein Ausgabebild darstellt, die Bildoperation an dem einen oder den mehreren Eingabebildern (204a - 204n) durchgeführt wird, die in der Bildcontainerdatei angegeben werden, jedes des einen oder der mehreren Eingabebilder (204a - 204n) ein codiertes Bild oder ein anderes abgeleitetes Bild mit einem oder mehreren Zuständen ist, und das Durchführen der Bildoperation zu einem Ausgabebild eines jeweiligen Zustands führt.

10. Vorrichtung nach Anspruch 9, ferner umfassend:
Mittel zum Speichern eines zweiten zustandsabhängigen abgeleiteten Bildelements, für welches das erste zustandsabhängige abgeleitete Bild (202) ein Eingabebild ist, in der Bildcontainerdatei.

11. Vorrichtung nach Anspruch 9, ferner umfassend:
Mittel zum Bereitstellen eines oder mehrerer Eingabeparameter für die Bildoperation des ersten zustandsabhängigen abgeleiteten Bildes (202), wobei Werte des einen oder der mehreren Eingabeparameter konfigurierbar sein sollen, wenn die Bildcontainerdatei wiedergegeben wird.

12. Vorrichtung nach Anspruch 9, ferner umfassend:
Mittel zum Erhalten einer Bildcontainerdatei als Eingabe;
wobei die Bildcontainerdatei einem Dateiformat entspricht, das zum Speichern einer Mehrzahl von zustandsabhängigen abgeleiteten Bildern in der Bildcontainerdatei imstande ist; und
wobei ein abgeleitetes Bild eine Bildoperation umfasst und ein Ausgabebild darstellt, die Bildoperation an dem einen oder den mehreren Eingabebildern (204a - 204n) durchgeführt wird, die in der Bildcontainerdatei angegeben werden, jedes des einen oder der mehreren Eingabebilder (204a - 204n) ein codiertes Bild oder ein anderes zustandsabhängiges abgeleitetes Bild ist, und das Durchführen der Bildoperation zum Ausgabebild führt;
Mittel zum Parsen aus der Bildcontainerdatei, dass bestimmte des einen oder der mehreren Eingabebilder (204a - 204n) durch ein erstes zustandsabhängiges abgeleitetes Bild verwendet werden, in welchem die Bildoperation unter Verwendung einer universellen Skriptsprache definiert wird;
Mittel zum Decodieren des einen oder der mehreren bestimmten Eingabebilder (204a - 204n) aus der Bildcontainerdatei;
Mittel zum Eingeben des einen oder der mehreren decodierten bestimmten Eingabebilder (204a - 204n) in die Bildoperation des ersten zustandsabhängigen abgeleiteten Bildes (202) unter Verwendung eines ersten vordefinierten Skripts der universellen Skriptsprache;
Mittel zum Durchführen der Bildoperation des ersten zustandsabhängigen abgeleiteten Bildes (202); und
Mittel zum Erhalten des Ausgabebildes des ersten zustandsabhängigen abgeleiteten Bildes (202) unter Verwendung eines zweiten vordefinierten Skripts der universellen Skriptsprache.

13. Vorrichtung nach Anspruch 12 ferner umfassend:
Mittel zum Parsen aus der Bildcontainerdatei, dass das erste zustandsabhängige abgeleitete Bild (202) ein erstes Eingabebild für ein zweites zustandsabhängiges abgeleitetes Bild ist; und
Mittel zum Durchführen der Bildoperation des zweiten zustandsabhängigen abgeleiteten Bildes, für welches das erste Eingabebild das Ausgabebild des ersten zustandsabhängigen abgeleiteten Bildes (202) ist, das unter Verwendung des zweiten vordefinierten Skripts der universellen Skriptsprache erhalten wird.

14. Vorrichtung nach Anspruch 12 ferner umfassend:
Mittel zum Eingeben von Werten eines oder mehrerer Eingabeparameter in die Bildoperation des ersten zustandsabhängigen abgeleiteten Bildes (202).

15. Vorrichtung nach Anspruch 14 ferner umfassend:
Mittel zum Generieren einer URL, welche Werte eines oder mehrerer Eingabeparameter mit einer Fragmentkennung und einer Abfragezeichenfolge definiert, wobei die Fragmentkennung das erste zustandsabhängige abgeleitete Bild (202) definiert; und
Mittel zum Extrahieren der Werte eines oder mehrerer Eingabeparameter aus der Abfragezeichenfolge.

## Revendications

1. Procédé de génération d'un fichier conteneur d'images comprenant les étapes suivantes :
générer un premier élément d'image (202) dérivée de manière dynamique, où une opération d'image est définie au moyen d'un langage de script universel, où l'opération d'image entre une ou plusieurs images d'entrée (204a - 204n) en utilisant un premier script prédéfini du langage de script universel et fournit une image de sortie en utilisant un second script prédéfini du langage de script universel, où l'image de sortie dépend d'au moins une variable d'état de l'image d'entrée ;
stocker le premier élément d'image dérivée de manière dynamique (202) dans le fichier conteneur d'images ; où le fichier conteneur d'images se conforme à un format de fichier capable de stocker une pluralité d'images dérivées de manière dynamique dans le fichier conteneur d'images ; et
où une image dérivée de manière dynamique (202) comprend une opération d'image et représente une image de sortie, l'opération d'image est effectuée sur une ou plusieurs images d'entrée (204a - 204n) indiquées dans le fichier conteneur d'images, chacune des une ou plusieurs images d'entrée (204a - 204n) est une image codée ou une autre image dérivée ayant un ou plusieurs états, et l'exécution de l'opération d'image résulte en une image de sortie d'un état respectif.

2. Procédé selon la revendication 1 comprenant en outre l'étape suivante :
stocker, dans le fichier conteneur d'images, un deuxième élément d'image dérivée de manière dynamique pour lequel la première image dérivée de manière dynamique (202) est une image d'entrée.

3. Procédé selon la revendication 1 comprenant en outre l'étape suivante :
fournir un ou plusieurs paramètres d'entrée à l'opération d'image de la première image dérivée de manière dynamique (202), où les valeurs des un ou plusieurs paramètres d'entrée sont destinées à être configurables lorsque le fichier conteneur d'images est lu.

4. Procédé selon la revendication 1, comprenant en outre les étapes suivantes :
obtenir un fichier conteneur d'images en entrée ;
où le fichier conteneur d'images se conforme à un format de fichier capable de stocker une pluralité d'images dérivées de manière dynamique dans le fichier conteneur d'images ; et
où une image dérivée de manière dynamique comprend une opération d'image et représente une image de sortie, l'opération d'image est exécutée sur une ou plusieurs images d'entrée (204a - 204n) indiquées dans le fichier conteneur d'images, chacune des une ou plusieurs images d'entrée (204a - 204n) est une image codée ou une autre image dérivée de manière dynamique, et l'exécution de l'opération d'image résulte en une image de sortie ;
analyser, à partir du fichier conteneur d'images, que certaines des une ou plusieurs images d'entrée sont utilisées par une première image dérivée de manière dynamique, où l'opération d'image est définie en utilisant un langage de script universel ;
décoder, à partir du fichier conteneur d'images, certaines des une ou plusieurs images d'entrée (204a - 204n) ;
entrer certaines des une ou plusieurs images d'entrée décodées dans l'opération d'image de la première image dérivée de manière dynamique (202) en utilisant le premier script prédéfini du langage de script universel ;
exécuter l'opération d'image de la première image dérivée de manière dynamique (202) ; et
obtenir l'image de sortie de la première image dérivée de manière dynamique (202) en utilisant le second script prédéfini du langage de script universel.

5. Procédé selon la revendication 4, comprenant en outre les étapes suivantes :
analyser, à partir du fichier conteneur d'images, que la première image dérivée de manière dynamique (202) est une première image d'entrée pour une deuxième image dérivée de manière dynamique ; et
exécuter l'opération d'image de la deuxième image dérivée de manière dynamique pour laquelle la première image d'entrée est l'image de sortie de la première image dérivée de manière dynamique (202) obtenue en utilisant le deuxième script prédéfini du langage de script universel.

6. Procédé selon la revendication 4 comprenant en outre l'étape suivante :
entrer des valeurs d'un ou plusieurs paramètres d'entrée dans l'opération d'image de la première image dérivée de manière dynamique.

7. Procédé selon la revendication 6, comprenant en outre les étapes suivantes :
générer une URL définissant des valeurs d'un ou plusieurs paramètres d'entrée avec un identificateur de fragment et une chaîne de requête, où l'identificateur de fragment identifie la première image dérivée de manière dynamique ; et
extraire les valeurs des un ou plusieurs paramètres d'entrée de la chaîne de requête.

8. Produit programme informatique comprenant au moins un support de stockage non transitoire lisible par ordinateur portant des instructions de programme informatique y étant intégrées pour une utilisation avec un ordinateur, les instructions de programme informatique comprenant des instructions de programme qui, lorsqu'elles sont exécutées par l'ordinateur, exécutent un procédé selon au moins l'une des revendications 1 à 7.

9. Appareil comprenant :
des moyens pour générer un premier élément d'image dérivée de manière dynamique (202), où une opération d'image est définie au moyen d'un langage de script universel, où l'opération d'image entre une ou
plusieurs images d'entrée (204a - 204n) en utilisant un premier script prédéfini du langage de script universel et fournit une image de sortie en utilisant un second script prédéfini du langage de script universel, où l'image de sortie dépend d'au moins une variable d'état de l'image d'entrée; et
des moyens pour stocker le premier élément d'image dérivée de manière dynamique (202) dans le fichier conteneur d'images ; où le fichier conteneur d'images se conforme à un format de fichier capable de stocker une pluralité d'images dérivées de manière dynamique dans le fichier conteneur d'images ; et
où une image dérivée de manière dynamique comprend une opération d'image et représente une image de sortie,
l'opération d'image est effectuée sur une ou plusieurs images d'entrée (204a - 204n) indiquées dans le fichier conteneur d'images, chacune des une ou plusieurs images d'entrée (204a - 204n) est une image codée ou une autre image dérivée ayant un ou plusieurs états, et
l'exécution de l'opération d'image résulte en une image de sortie d'un état respectif.

10. Appareil selon la revendication 9, comprenant en outre :
des moyens pour stocker, dans le fichier conteneur d'images, un deuxième élément d'image dérivée de manière dynamique pour lequel la première image dérivée de manière dynamique (202) est une image d'entrée.

11. Appareil selon la revendication 9, comprenant en outre :
des moyens pour fournir un ou plusieurs paramètres d'entrée à l'opération d'image de la première image dérivée de manière dynamique (202), où les valeurs des un ou plusieurs paramètres d'entrée sont destinées à être configurables lorsque le fichier conteneur d'images est lu.

12. Appareil selon la revendication 9, comprenant en outre :
des moyens pour obtenir un fichier conteneur d'images en entrée ;
où le fichier conteneur d'images se conforme à un format de fichier capable de stocker une pluralité d'images dérivées de manière dynamique dans le fichier conteneur d'images ; et
où une image dérivée de manière dynamique comprend une opération d'image et représente une image de sortie, l'opération d'image est exécutée sur une ou plusieurs images d'entrée (204a - 204n) indiquées dans le fichier conteneur d'images, chacune des une ou plusieurs images d'entrée (204a - 204n) est une image codée ou une autre image dérivée de manière dynamique, et l'exécution de l'opération d'image résulte en une image de sortie ;
des moyens pour analyser, à partir du fichier conteneur d'images, que certaines des une ou plusieurs images d'entrée (204a - 204n) sont utilisées par une première image dérivée de manière dynamique, où l'opération d'image est définie en utilisant un langage de script universel ;
des moyens pour décoder, à partir du fichier conteneur d'images, certaines des une ou plusieurs images d'entrée (204a - 204n) ;
des moyens pour entrer certaines des une ou plusieurs images d'entrée décodées (204a - 204n) dans l'opération d'image de la première image dérivée de manière dynamique (202) en utilisant le premier script prédéfini du langage de script universel ;
des moyens pour exécuter l'opération d'image de la première image dérivée de manière dynamique (202) ; et
des moyens pour obtenir l'image de sortie de la première image dérivée de manière dynamique (202) en utilisant le second script prédéfini du langage de script universel.

13. Appareil selon la revendication 12, comprenant en outre :
des moyens pour analyser, à partir du fichier conteneur d'images, que la première image dérivée de manière dynamique (202) est une première image d'entrée pour une deuxième image dérivée de manière dynamique ; et
des moyens pour exécuter l'opération d'image de la deuxième image dérivée de manière dynamique pour laquelle la première image d'entrée est l'image de sortie de la première image dérivée de manière dynamique (202) obtenue en utilisant le deuxième script prédéfini du langage de script universel.

14. Appareil selon la revendication 12, comprenant en outre :
des moyens pour entrer des valeurs d'un ou plusieurs paramètres d'entrée dans l'opération d'image de la première image dérivée de manière dynamique (202).

15. Appareil selon la revendication 14, comprend en outre :
des moyens pour générer une URL définissant des valeurs d'un ou plusieurs paramètres d'entrée avec un identificateur de fragment et une chaîne de requête, où l'identificateur de fragment identifie la première image dérivée de manière dynamique (202) ; et
des moyens pour extraire les valeurs des un ou plusieurs paramètres d'entrée de la chaîne de requête.
